# EUROPÄISCHE PATENTANMELDUNG

(11) **EP 4 261 084 A1**
(43) Veröffentlichungstag der Anmeldung: **18.10.2023**
(21) Anmeldenummer: 23155837.0
(22) Anmeldetag: 09.02.2023
(51) Int. Cl.: B60R 1/00, A01B 69/00

(54) **SPIEGELERSATZSYSTEM UND LANDWIRTSCHAFTLICHE ARBEITSMASCHINE MIT SPIEGELERSATZSYSTEM**

(30) Priorität: 12.04.2022 DE 102022108899
(71) Anmelder: CLAAS Selbstfahrende Erntemaschinen GmbH, 33428 Harsewinkel (DE)
(72) Erfinder: Thiesmann, Waldemar, 49080 Osnabrück (DE); Albers, Klaus, 48477 Hörstel (DE); Beck, Robert, 48231 Warendorf (DE); Galland, Stefan, 33428 Harsewinkel (DE); Geiger, Jan, 49074 Osnabrück (DE); Kirchbeck, Ingo, 59302 Oelde (DE); Losch, Michael, 33775 Versmold (DE); Piontek, Michael, 23701 Suesel (DE); Jürschik, Peter, 33335 Gütersloh (DE); Neitemeier, Dennis, 59510 Lippetal (DE)
(74) Vertreter: CLAAS Gruppe

(57) **Zusammenfassung**

Die Erfindung betrifft ein Spiegelersatzsystem (3) und eine landwirtschaftliche Arbeitsmaschine (2) mit einem solchen Spiegelersatzsystem (3) wobei das Spiegelersatzsystem (3), zumindest eine Visualisierungseinheit (4) umfasst und die Visualisierungseinheit (4) mit einer Datenverarbeitungseinheit (5) gekoppelt ist, wobei die Datenverarbeitungseinheit (5) von einer oder mehreren Kamerasystemen (6) generierte Bildinformationen (X) und Parameterinformationen (Y) bereitstellt und die zumindest eine Visualisierungseinheit (4) in Visualisierungsbereiche (7,8) unterteilt ist und das jedem Visualisierungsbereich (7,8) von der Datenverarbeitungseinheit (5) bereitgestellte Visualisierungsinhalte (9) zugewiesen werden und die Visualisierungsinhalte (9) Bildinformationen (X) und Parameterinformationen (Y) umfassen.

## Beschreibung

Die Erfindung betrifft ein Spiegelersatzsystem und eine landwirtschaftliche Arbeitsmaschine mit einem solchen Spiegelersatzsystem nach den Oberbegriffen der Ansprüche 1 und 5.

Aus dem Stand der Technik sind die verschiedensten Spiegelersatzsysteme bereits bekannt. So offenbart beispielsweise die DE 10 2017 206 977 A1 ein Spiegelersatzsystem bei welchem die Außenspiegel eines Kraftfahrzeugs, hier Personenkraftwagen, in Regionen nach Art eines Weitwinkelspiegels unterteilt sind und in jede dieser Regionen Kamerabilder projiziert werden, wobei die Bilder jeweils Umfeldbereiche des Fahrzeugs visualisieren. Es ist zudem möglich, dass der Fahrzeugführer die Position und Gestalt der Visualisierungsbereiche in Größe und Form anpassen kann.

Aus EP 3 401 167 B1 ist zudem ein Spiegelersatzsystem für Lastkraftwagen bekannt geworden, bei welchem die Spiegelersatzsysteme ebenfalls in Visualisierungsbereiche unterteilte als Spiegel fungierende Visualisierungseinrichtungen umfassen, wobei hier ein Kamerabild in Bildbereiche zerlegt wird und der jeweilige Bildbereich situationsabhängig gezoomt wird.

Aus dem Bereich landwirtschaftlicher Arbeitsmaschinen ist es gemäß EP 2 743 132 B1 auch bereits bekannt, in die Spiegelfläche konventioneller Spiegel Kamerabilder einzublenden, die Bereiche im Umfeld der landwirtschaftlichen Arbeitsmaschine visualisieren, die durch die originären Spiegel nicht erfassbar sind.

Obgleich all diese bekannten Systeme den Vorteil haben, dass dem Fahrer des jeweiligen Fahrzeugs Spiegelersatzsysteme an die Hand gegeben werden, die eine deutlich verbesserte Beobachtung des Umfeldes des jeweiligen Fahrzeugs ermöglichen, haftet ihnen zumindest der Nachteil an, dass sie das Umfeld nach Art eines konventionellen Spiegels abbilden und der Fahrer selbst Schlüsse ziehen muss, wie auf die visualisierten Inhalte zu reagieren ist.

Es ist deshalb Aufgabe der Erfindung die beschriebenen Nachteile des Standes der Technik zu vermeiden und insbesondere ein Spiegelersatzsystem vorzuschlagen, welches den Nutzer des Spiegelersatzsystems bei der Interpretation der visualisierten Inhalte entlastet.

Diese Aufgabe wird erfindungsgemäß durch die kennzeichnenden Merkmale der Ansprüche 1 und 5 gelöst.

Indem das Spiegelersatzsystem, zumindest eine Visualisierungseinheit umfasst, wobei die Visualisierungseinheit mit einer Datenverarbeitungseinheit gekoppelt ist und die Datenverarbeitungseinheit von einer oder mehreren Kamerasystemen generierte Bildinformationen und Parameterinformationen bereitstellt, wobei die zumindest eine Visualisierungseinheit in Visualisierungsbereiche unterteilt ist und das jedem Visualisierungsbereich von der Datenverarbeitungseinheit bereitgestellte Visualisierungsinhalte zugewiesen werden und die Visualisierungsinhalte Bildinformationen und Parameterinformationen umfassen wird sichergestellt, dass der Nutzer des Spiegelersatzsystems bei der Interpretation der visualisierten Inhalte entlastet wird.

In einer vorteilhaften Ausgestaltung der Erfindung sind die Visualisierungsinhalte editierbar, sodass das Spiegelersatzsystem hochflexibel in verschiedensten Einsatzbedingung verwendbar ist.

Indem die Visualisierungseinheit in Betriebsmodi betreibbar ist, wobei die Visualisierungsbereiche der Visualisierungseinheit einen einzigen Betriebsmodus oder mehrere Betriebsmodi visualisieren wird zudem sichergestellt, dass das Spiegelersatzsystem abhängig von einem ganz spezifischen Einsatzfall so konfiguriert werden kann, dass es für diesen speziellen Einsatzfall eine optimale Visualisierung des Umfeldes der landwirtschaftlichen Arbeitsmaschine kombiniert mit ergänzenden Informationen bereitstellt.

Das Spiegelersatzsystem kann dann eine optimale Kombination von konventioneller Spiegelfunktion kombiniert mit der Visualisierung spezifischer Informationen einer konkreten Einsatzbedingung bilden, wenn in einer vorteilhaften Ausgestaltung der Erfindung die Visualisierungseinheit als linksseitiger oder rechtsseitiger Außenspiel oder als Innenspiegel ausgeführt ist.

Vor dem Hintergrund, dass landwirtschaftliche Arbeitsmaschinen in Bezug auf Sichtverhältnisse und Informationsverarbeitung große Anforderungen an einen Fahrer solcher landwirtschaftlicher Arbeitsmaschinen stellen, ist es von Vorteil, wenn eine landwirtschaftliche Arbeitsmaschine mit einer Fahrzeugkabine und einem der Fahrzeugkabine zugeordneten Spiegelersatzsystem ausgerüstet ist, wobei das Spiegelersatzsystem zumindest eine erfindungsgemäße Visualisierungseinheit umfasst und die Visualisierungseinheit als linksseitiger und/oder rechtsseitiger Außenspiel und/oder als Innenspiegel ausgeführt ist.

Eine verbesserte Spiegelfunktion und eine optimale Bereitstellung von Informationen wird dann sichergestellt, wenn in einer vorteilhaften Ausgestaltung der Erfindung der Fahrzeugkabine jeweils mehrere als linksseitige und/oder rechtsseitige Außenspiegel und/oder als Innenspiegel ausgeführte Visualisierungseinheiten zugeordnet sind. In diesem Zusammenhang ist es auch von Vorteil, wenn die als rechtsseitige und linksseitige Außenspiegel ausgeführten Visualisierungseinheiten der Fahrzeugkabine innenseitig und/oder außenseitig zugeordnet sind.

Aufgrund der Vielzahl von zu beobachtenden Prozessen während eines Ernteeinsatzes einer landwirtschaftlichen Arbeitsmaschine ist es in einer vorteilhaften Ausgestaltung der Erfindung von Vorteil, wenn die landwirtschaftliche Arbeitsmaschine als Mähdrescher oder Feldhäcksler ausgeführt ist.

Um den Fahrer der landwirtschaftlichen Arbeitsmaschine beim Fahren auf der Straße zu entlasten, ist in einer vorteilhaften Ausgestaltung der Erfindung vorgesehen, dass die Visualisierungseinrichtung in einem Betriebsmodus "Straße" betreibbar ist, wobei im Betriebsmodus "Straße" die Visualisierungseinheit zumindest zwei Visualisierungsbereiche umfasst, wobei der eine Visualisierungsbereich einen Bereich um ein Bodeneingriffsmittel einer Vorderachse der landwirtschaftlichen Arbeitsmaschine und der weitere Visualisierungsbereich einen rückwärtigen Bereich der landwirtschaftlichen Arbeitsmaschine visualisiert, wobei die Visualisierungsinhalte beider Visualisierungsbereiche Bildinformationen und/oder Parameterinformationen umfassen und die Bildinformationen von Kamerasystemen generiert werden, die in Richtung Boden und in Richtung des rückwärtigen Bereiches der landwirtschaftlichen Arbeitsmaschine gerichtet sind und die Parameterinformationen zumindest ein Strukturbild einer Ausrichtung eines rückwärtig an der landwirtschaftlichen Arbeitsmaschine adaptierten Anbaugerätes umfassen.

In diesem Zusammenhang ist es von Vorteil, wenn der Betriebsmodus "Straße" einen Betriebsmodus "gerade Fahrt" und einen Betriebsmodus "Kurvenfahrt" umfasst und dass im Betriebsmodus "Kurvenfahrt" ein größerer Blickwinkel des in den rückwärtigen Bereich der landwirtschaftlichen Arbeitsmaschine gerichteten Kamerasystems realisiert ist. Dies hat insbesondere den Effekt, dass den bei Kurvenfahrt häufig schlechten Sichtverhältnissen für den Fahrer entgegengewirkt wird.

In einer weiteren vorteilhaften Ausgestaltung der Erfindung ist vorgesehen, dass der Betriebsmodus der Visualisierungseinheit eine Vielzahl von Betriebsmodi "Ernte" umfasst. Dies hat insbesondere den Effekt, dass die Visualisierungsinhalte der jeweiligen Visualisierungseinheiten individuell an ganz spezifische Erntesituationen anpassbar sind.

Indem die Visualisierungseinheit in einer Ausgestaltungsvariante in einem Betriebsmodus "Ernte 1" betreibbar ist, wobei im Betriebsmodus "Ernte 1" die Visualisierungseinheit zumindest zwei Visualisierungsbereiche umfasst, wobei der eine Visualisierungsbereich einen Bereich im rückwärtige Bereich eines Anbaugerätes und der weitere Visualisierungsbereich einen rückwärtigen Bereich der landwirtschaftlichen Arbeitsmaschine visualisiert und die Visualisierungsinhalte beider Visualisierungsbereiche Bildinformationen und/oder Parameterinformationen umfassen und die Bildinformationen von Kamerasystemen generiert werden die in Richtung Boden und in Richtung des rückwärtigen Bereiches der landwirtschaftlichen Arbeitsmaschine gerichtet sind und die Parameterinformationen zumindest die Einblendung des gewählten Betriebsmodus umfasst, wird sichergestellt, dass das Spiegelersatzsystem neben der originären Rück- und Seitenspiegelfunktion auch eine speziell auf das Vorsatzgerät gerichtete Spiegelfunktion, nämlich die Visualisierung der Arbeitsqualität eine Vorsatzgerätes, realisiert. Um in diesem Zusammenhang dem Fahrer die visuelle Beurteilung der Arbeitsqualität des Anbaugerätes zu vereinfachen ist in einer vorteilhaften Ausgestaltung vorgesehen, dass der Visualisierungsinhalt des den rückwärtigen Bereich des Anbaugerätes abbildende Visualisierungsbereich in einem flächenmäßig größeren Visualisierungsbereich angezeigt wird und der Bildausschnitt um 90° gedreht ist.

In einer vorteilhaften Weiterbildung der Erfindung ist die Visualisierungseinheit in einem Betriebsmodus "Ernte 2" betreibbar, wobei im Betriebsmodus "Ernte 2" die Visualisierungseinheit zumindest zwei Visualisierungsbereiche umfasst, wobei der eine Visualisierungsbereich einen die Bestandskante umfassenden Bereich und der weitere Visualisierungsbereich einen rückwärtigen Bereich der landwirtschaftlichen Arbeitsmaschine visualisiert, wobei die Visualisierungsinhalte beider Visualisierungsbereiche Bildinformationen und/oder Parameterinformationen umfassen und die Bildinformationen von Kamerasystemen generiert werden die in Richtung Bestandskante und in Richtung des rückwärtigen Bereiches der landwirtschaftlichen Arbeitsmaschine gerichtet sind und die Parameterinformationen zumindest die Einblendung des gewählten Betriebsmodus umfasst. Dies hat insbesondere den Effekt, dass der Fahrer der landwirtschaftlichen Arbeitsmaschine eine Information darüber erhält, ob das Anbaugerät hinreichend genau an der Bestandskante geführt wird, sodass er bei Abweichungen gezielt gegensteuern kann.

Zudem kann die Visualisierungseinheit in einer weiteren Ausgestaltungsvariante in einem Betriebsmodus "Ernte 3" betrieben werden, wobei im Betriebsmodus "Ernte 3" die Visualisierungseinheit zumindest zwei Visualisierungsbereiche umfasst, wobei der eine Visualisierungsbereich einen das Vorfeld der landwirtschaftlichen Arbeitsmaschine umfassenden Bereich und der weitere Visualisierungsbereich einen rückwärtigen Bereich der landwirtschaftlichen Arbeitsmaschine visualisiert, wobei die Visualisierungsinhalte beider Visualisierungsbereiche Bildinformationen und/oder Parameterinformationen umfassen, wobei die Bildinformationen von Kamerasystemen generiert werden die in Richtung Vorfeld der landwirtschaftlichen Arbeitsmaschine und in Richtung des rückwärtigen Bereiches der landwirtschaftlichen Arbeitsmaschine gerichtet sind und die Parameterinformationen zumindest die Einblendung von Sollfahrspuren des gewählten Betriebsmodus umfassen. Eine derartige Ausgestaltung hat den Effekt, dass der Fahrer von dem Spiegelersatzsystem direkte Informationen darüber erhält, ob sein tatsächlicher Fahrweg mit dem ursprünglich geplanten Fahrweg korrespondiert, sodass er im Falle signifikanter Abweichungen in den automatisierten Lenkvorgang eingreifen kann.

In einer weiteren vorteilhaften Ausgestaltung kann die Visualisierungseinheit in einem Betriebsmodus "Ernte 4" betrieben werden, wobei im Betriebsmodus "Ernte 4" die Visualisierungseinheit zumindest zwei Visualisierungsbereiche umfasst, wobei der eine Visualisierungsbereich einen den Gutfluss im Anbaugerät umfassenden Bereich und der weitere Visualisierungsbereich einen rückwärtigen Bereich der landwirtschaftlichen Arbeitsmaschine visualisiert und die Visualisierungsinhalte beider Visualisierungsbereiche Bildinformationen und/oder Parameterinformationen umfassen, wobei die Bildinformationen von Kamerasystemen generiert werden die in Richtung des Gutflusses im Anbaugerät und in Richtung des rückwärtigen Bereiches der landwirtschaftlichen Arbeitsmaschine gerichtet sind und die Parameterinformationen zumindest die Einblendung von Gutflussstörungen umfasst. Eine derartige Ausgestaltung hat insbesondere den Effekt, dass das Spiegelersatzsystem dem Fahrer Informationen darüber bereitstellt, ob ein Gutstau im Anbaugerät zu erwarten ist, sodass der Fahrer geeignete Gegenmaßnahmen, wie etwa die Reduzierung der Fahrgeschwindigkeit, rechtzeitig ergreifen kann.

Weiter kann die Visualisierung in einem Betriebsmodus "Ernte 5" betrieben werden, wobei im Betriebsmodus "Ernte 5" die Visualisierungseinheit zumindest zwei Visualisierungsbereiche umfasst, wobei die Visualisierungsbereich nach einem oder mehreren der zuvor beschriebenen Betriebsmodi ausgestaltet sein können und wobei diese Visualisierungsbereiche von einem Visualisierungsbereich zur Visualisierung von Parameterinformationen überlagert werden, wobei die Visualisierungsinhalte der Visualisierungsbereiche Bildinformationen und/oder Parameterinformationen umfassen und die Bildinformationen zumindest eines Visualisierungsbereichs von Kamerasystemen generiert werden die in Richtung eines rückwärtigen Bereiches der landwirtschaftlichen Arbeitsmaschine gerichtet sind und die in dem überlagernden Visualisierungsbereich visualisierten Parameterinformationen zumindest die Visualisierung des Gutstromes in der landwirtschaftlichen Erntemaschine, vorzugsweise des Körnerstroms, umfassen. Dies hat vor allem den Effekt, dass das Spiegelersatzsystem Zusatzinformationen für den Fahrer generiert, die dem Fahrer die Beurteilung der Arbeitsqualität der landwirtschaftlichen Arbeitsmaschine ermöglicht und ihn in die Lage versetzt, bei Bedarf Parametereinstellungen der landwirtschaftlichen Arbeitsmaschine gezielt anzupassen, um die Arbeitsqualität zu verbessern.

Schließlich kann die Visualisierungseinheit in einer weiteren vorteilhaften Ausgestaltung in einem Betriebsmodus "Ernte 6" betrieben werden, wobei im Betriebsmodus "Ernte 6" die Visualisierungseinheit zumindest zwei Visualisierungsbereiche umfasst, wobei der eine Visualisierungsbereich einen den Erntegutbestand im Vorfeld des Anbaugerätes umfassenden Bereich und der weitere Visualisierungsbereich einen rückwärtigen Bereich der landwirtschaftlichen Arbeitsmaschine visualisiert, wobei die Visualisierungsinhalte beider Visualisierungsbereiche Bildinformationen und/oder Parameterinformationen umfassen und die Bildinformationen von Kamerasystemen generiert werden, die von oben in Richtung des Erntegutbestandes im Vorfeld des Anbaugerätes und in Richtung des rückwärtigen Bereiches der landwirtschaftlichen Arbeitsmaschine gerichtet sind und die Parameterinformationen zumindest die Einblendung des gewählten Betriebsmodus umfassen. Dies hat insbesondere den Effekt, dass der Fahrer Informationen über den zu erwartenden Erntegutdurchsatz und die Qualität der Annahme des Gutbestandes durch das Anbaugerät erhält und so in die Lage versetzt wird, bei Bedarf etwa die Fahrgeschwindigkeit der landwirtschaftlichen Arbeitsmaschine oder die Position der gutannehmenden Elemente des Anbaugerätes so anzupassen, dass frühzeitig Maßnahmen eingeleitete werden, die einem Gutstau im Bereich des Anbaugerätes entgegenwirken.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Darstellung des erfindungsgemäßen Spiegelersatzsystems
- Figur 2: erste Ausgestaltungsvarianten der erfindungsgemäßen Visualisierungseinheit
- Figur 3: Ausgestaltungsvarianten der Visualisierungseinheit im Betriebsmodus "Ernte"
- Figur 4: weitere Ausgestaltungsvarianten der Visualisierungseinheit im Betriebsmodus "Ernte"
- Figur 5: Ausgestaltungsvarianten der Visualisierungseinheit in weiteren Betriebsmodi
- Figur 6: weitere Ausgestaltungsvarianten der Visualisierungseinheit in weiteren Betriebsmodi
- Figur 7: Ausgestaltungsvarianten der Positionierung der erfindungsgemäßen Kamerasysteme

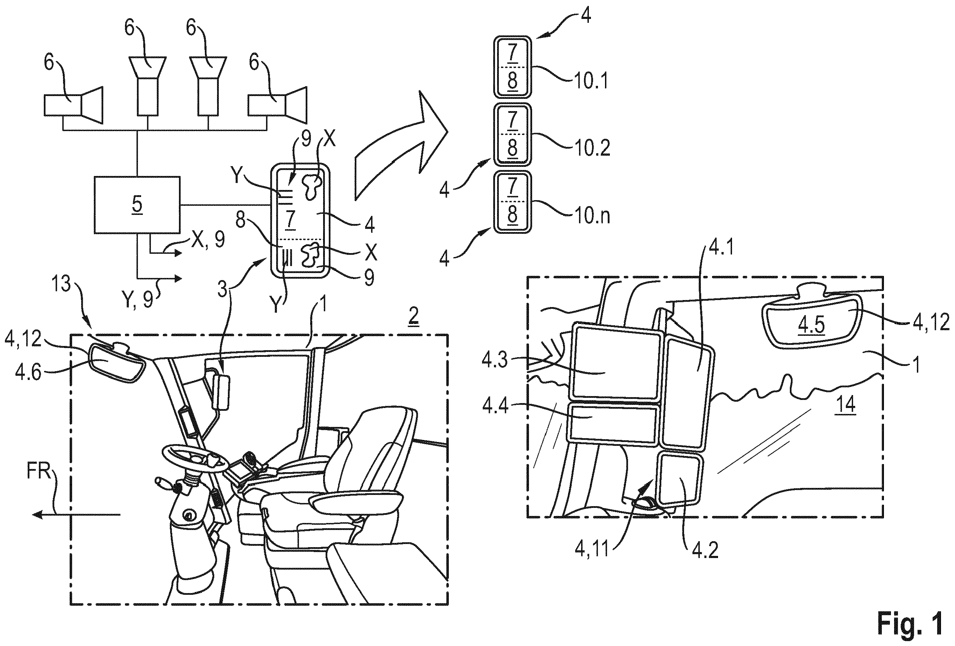

Fig. 1 zeigt schematisch die Fahrzeugkabine 1 einer landwirtschaftlichen Arbeitsmaschine 2. Der Fahrzeugkabine 1 ist zumindest ein erfindungsgemäßes Spiegelersatzsystem 3 zugeordnet, wobei das erfindungsgemäße Spiegelersatzsystem 3 zumindest eine Visualisierungseinheit 4 umfasst. Die Visualisierungseinheit 4 ist mit einer Datenverarbeitungseinheit 5 gekoppelt, wobei die Datenverarbeitungseinheit 5 in noch näher zu beschreibender Weise von einer oder mehreren Kamerasystemen 6 generierte Bildinformationen X und Parameterinformationen Y bereitstellt. Die Visualisierungseinheit 4 ist in erfindungsgemäßer Weise im dargestellten Ausführungsbeispiel in zwei Visualisierungsbereiche 7, 8 unterteilt, wobei jedem Visualisierungsbereich 7, 8 von der Datenverarbeitungseinheit 5 bereitgestellte Visualisierungsinhalte 9 zugewiesen werden und die Visualisierungsinhalte 9 die Bildinformationen X und Parameterinformationen Y umfassen. Es liegt im Rahmen der Erfindung, dass die Visualisierungseinheit 4 mehr als die zwei dargestellten Visualisierungsbereiche 7, 8 umfasst. Die Visualisierungsinhalte 9 sind zudem editierbar. Die Visualisierungseinheit 4 ist zudem in Betriebsmodi 10.1 .. 10.n betreibbar, wobei jeder Visualisierungsbereich 7, 8 der Visualisierungseinheit 4 einen einzigen Betriebsmodus 10.1 ..n oder mehrere Betriebsmodi 10.1 .. 10.n visualisiert.

Weiter kann die Visualisierungseinrichtung 4 als linksseitiger oder rechtsseitiger Außenspiegel 11 und/oder als Innenspiegel 12 ausgeführt sein. In diesem Zusammenhang liegt es im Rahmen der Erfindung, dass die als Außenspiegel 11 ausgeführte Visualisierungseinheit 4 von einer Vielzahl von Visualisierungseinheiten 4.1 ... 4.4 gebildet werden kann, die entweder als innerhalb der Fahrzeugkabine 1 positionierte Visualisierungseinheiten 4.3, 4.4 und/oder als außerhalb der Fahrzeugkabine 1 positionierte Visualisierungseinheiten 4.1, 4.2 ausgeführt sind. Aus Vereinfachungsgründen sind im Ausführungsbeispiel nach Figur 1 nur die in Fahrtrichtung FR gesehen rechtsseitigen Außenspiegel 11 dargestellt, wobei die linksseitigen, nicht dargestellten Außenspiegel 11 in analoger Weise ausgeführt sind. Zudem können der Fahrzeugkabine 1 eine Vielzahl von als Innenspiegel 12 ausgeführte Visualisierungseinheiten 4.5, 4.6 zugeordnet sein. Im dargestellten Ausführungsbeispiel erfüllt die frontseitig der Fahrzeugkabine 1 zugeordnete Visualisierungseinheit 4.6 vorzugsweise die Funktion bekannter Rückspiegel 13. Weiter kann eine als Innenspiegel 12 ausgeführte Visualisierungseinheit 4.5 der Fahrzeugkabine 1 an beliebiger Stelle zugeordnet sein. Im dargestellten Ausführungsbeispiel ist beispielhaft eine Position der Visualisierungseinrichtung 4.5 im Bereich einer Seitenscheibe 14 der Fahrzeugkabine 1 gezeigt. Damit kann erreicht werden, dass eine als Innenspiegel 12 ausgeführte Visualisierungseinheit 4 in einem mit den jeweiligen Visualisierungsinhalten 9 korrespondierenden Bereich der landwirtschaftlichen Arbeitsmaschine 2 positioniert ist, sodass der Fahrer 15 der landwirtschaftlichen Arbeitsmaschine 2 intuitiv die jeweils visualisierten Inhalte 9 einem Bereich der landwirtschaftlichen Arbeitsmaschine 2 zuordnen kann. So kann beispielsweise die der in Fahrtrichtung FR gesehen rechten Seitenscheibe 14 zugeordnete Visualisierungseinheit 4.5 Visualisierungsinhalte 9 anzeigen, die auf die in Fahrtrichtung FR gesehen rechte Seite der landwirtschaftlichen Arbeitsmaschine 2 bezogen sind.

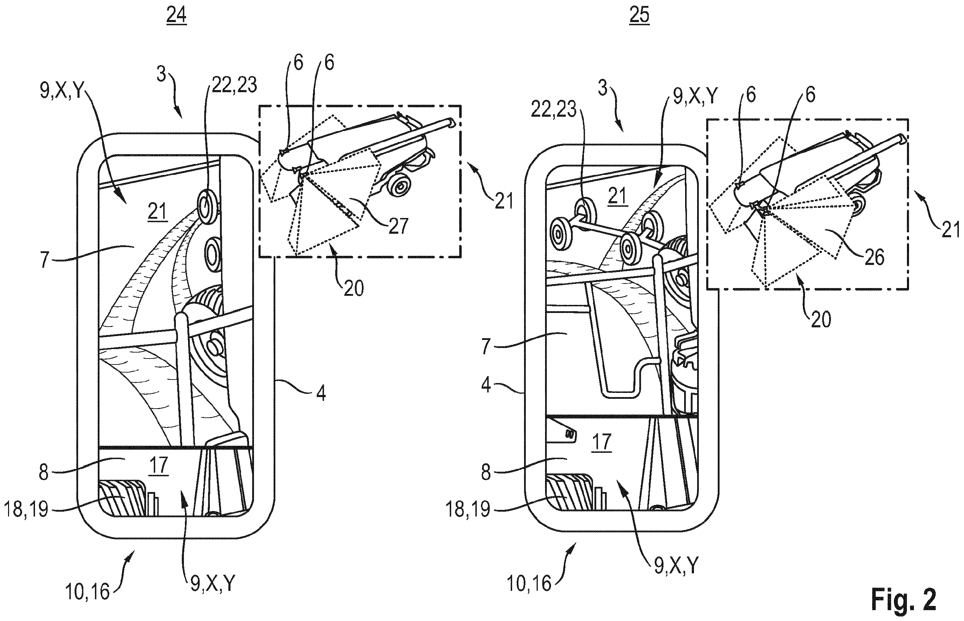

Figur 2 zeigt eine erste Ausgestaltungsvariante des erfindungsgemäßen Spiegelersatzsystems 3. Beide Darstellungen in Figur 2 zeigen das Betreiben des Spiegelersatzsystems 3 in einem Betriebsmodus 10 "Straße" 16. Im Betriebsmodus "Straße" 16 umfasst die Visualisierungseinheit 4 zumindest zwei Visualisierungsbereiche 7, 8, wobei der eine Visualisierungsbereich 8 einen Bereich 17 um ein Bodeneingriffsmittel 18, hier ein Laufrad einer Vorderachse 19 der landwirtschaftlichen Arbeitsmaschine 2 visualisiert. Der weitere Visualisierungsbereich 7 zeigt einen rückwärtigen Bereich 21 der landwirtschaftlichen Arbeitsmaschine 2, wobei die Visualisierungsinhalte 9 beider Visualisierungsbereiche 7, 8 erfindungsgemäß Bildinformationen X und/oder Parameterinformationen Y umfassen. Dabei werden die Bildinformationen X von den bereits erwähnten und an sich bekannten Kamerasystemen 6 generiert, die in Richtung Boden 20 und in Richtung des rückwärtigen Bereiches 21 der landwirtschaftlichen Arbeitsmaschine 2 gerichtet sind. Die zudem visualisierten Parameterinformationen Y umfassen im dargestellten Betriebsmodus 10 zumindest ein Strukturbild 22 einer Ausrichtung eines rückwärtig an der landwirtschaftlichen Arbeitsmaschine 2 adaptierten Anbaugerätes 23.

Der Betriebsmodus "Straße" 16 ist zudem so beschaffen, dass er einen Betriebsmodus "gerade Fahrt" 24 und einen Betriebsmodus "Kurvenfahrt" 25 umfasst, wobei im Betriebsmodus "Kurvenfahrt" 25 ein Blickwinkel 26 des in den rückwärtigen Bereich 21 der landwirtschaftlichen Arbeitsmaschine 2 gerichteten Kamerasystems 6 größer ist als der Blickwinkel 27 desselben Kamerasystems 6 im Betriebsmodus "gerade Fahrt" 24.

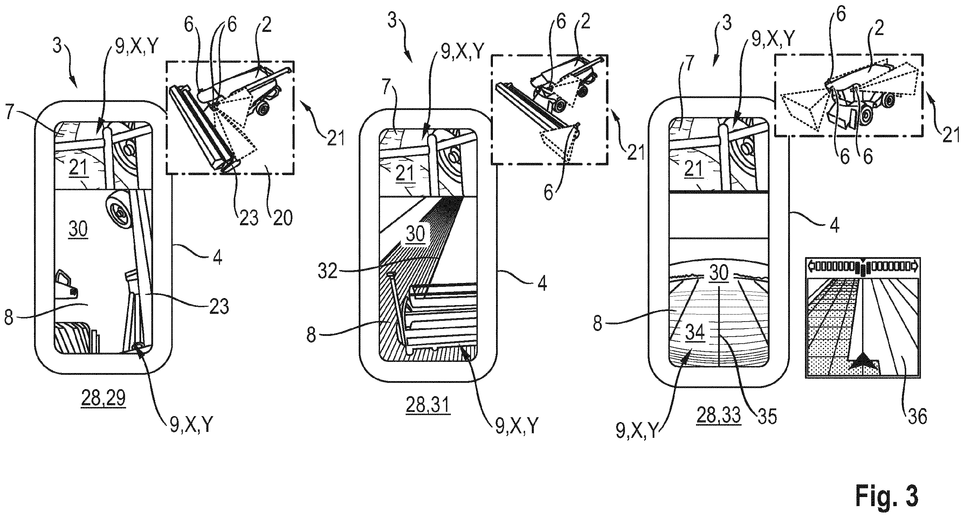

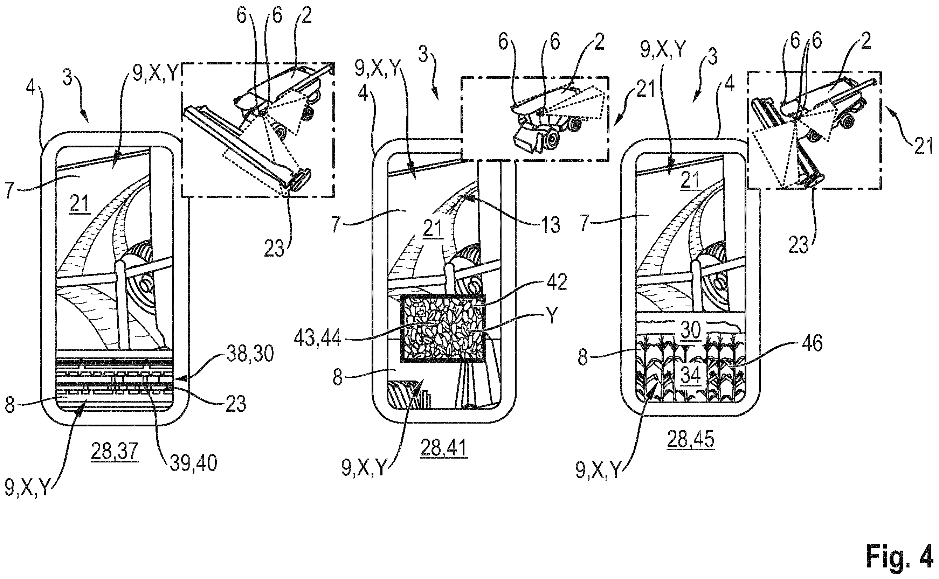

In einer weiteren Ausgestaltung des erfindungsgemäßen Spiegelersatzsystems 3 gemäß der Figuren 3 und 4 umfasst der Betriebsmodus 10 der Visualisierungseinheit 4 eine Vielzahl von Betriebsmodi "Ernte" 28.

Die linke Darstellung der Figur 3 zeigt das Betreiben der Visualisierungseinheit 4 in einem Betriebsmodus "Ernte 1" 29, wobei im Betriebsmodus "Ernte 1" 29 die Visualisierungseinheit 4 zumindest zwei Visualisierungsbereiche 7, 8 umfasst. Der eine Visualisierungsbereich 8 visualisiert einen Bereich 30 im rückwärtige Bereich eines Anbaugerätes 23, hier vorzugsweise eines sogenannten Erntevorsatzes. Der weitere Visualisierungsbereich 7 zeigt einen rückwärtigen Bereich 21 der landwirtschaftlichen Arbeitsmaschine 2, wobei die Visualisierungsinhalte 9 beider Visualisierungsbereiche 7, 8 Bildinformationen X und/oder Parameterinformationen Y umfassen und die Bildinformationen X von Kamerasystemen 6 generiert werden, die in Richtung Boden 20 und in Richtung des rückwärtigen Bereiches 21 der landwirtschaftlichen Arbeitsmaschine 2 gerichtet sind, während die Parameterinformationen Y zumindest die Einblendung des gewählten Betriebsmodus 29, hier "Ernte 1" umfasst. Eine vorteilhafte Ausgestaltung ergibt sich in diesem Zusammenhang dann, wenn der Visualisierungsinhalt 9 des den rückwärtigen Bereich 30 des als Erntevorsatz ausgeführten Anbaugerätes 23 abbildende Visualisierungsbereich 30 in einem flächenmäßig größeren Visualisierungsbereich 8 angezeigt wird und der Bildausschnitt um 90° gedreht ist.

Die mittlere Darstellung der Figur 3 zeigt das Betreiben der Visualisierungseinheit 4 in einem Betriebsmodus "Ernte 2" 31, wobei im Betriebsmodus "Ernte 2" 31 die Visualisierungseinheit 4 zumindest zwei Visualisierungsbereiche 7, 8 umfasst. Der eine Visualisierungsbereich 8 visualisiert einen die Bestandskante 32 umfassenden Bereich 30. Der weitere Visualisierungsbereich 7 zeigt einen rückwärtigen Bereich 21 der landwirtschaftlichen Arbeitsmaschine 2, wobei die Visualisierungsinhalte 9 beider Visualisierungsbereiche 7, 8 Bildinformationen X und/oder Parameterinformationen Y umfassen und die Bildinformationen X von Kamerasystemen 6 generiert werden, die in Richtung Bestandskante 32 und in Richtung des rückwärtigen Bereiches 21 der landwirtschaftlichen Arbeitsmaschine 2 gerichtet sind und die Parameterinformationen Y zumindest die Einblendung des gewählten Betriebsmodus 31, hier "Ente 2" umfasst.

Die rechte Darstellung der Figur 3 zeigt das Betreiben der Visualisierungseinheit 4 in einem Betriebsmodus "Ernte 3" 33, wobei im Betriebsmodus "Ernte 3" 33 die Visualisierungseinheit 4 zumindest zwei Visualisierungsbereiche 7, 8 umfasst. Der eine Visualisierungsbereich 8 visualisiert einen das Vorfeld 34 der landwirtschaftlichen Arbeitsmaschine 2 umfassenden Bereich 30. Der weitere Visualisierungsbereich 7 zeigt einen rückwärtigen Bereich 21 der landwirtschaftlichen Arbeitsmaschine 2, wobei die Visualisierungsinhalte 9 beider Visualisierungsbereiche 7, 8 Bildinformationen X und/oder Parameterinformationen Y umfassen und die Bildinformationen von Kamerasystemen 6 generiert werden, die in Richtung Vorfeld 34 der landwirtschaftlichen Arbeitsmaschine 2 und in Richtung des rückwärtigen Bereiches 21 der landwirtschaftlichen Arbeitsmaschine 2 gerichtet sind und die Parameterinformationen Y zumindest die Einblendung von Sollfahrspuren 35 des gewählten Betriebsmodus 33 umfasst. Im einfachsten Fall können die visualisierten Sollfahrspuren 35 aus einem an sich bekannten und daher hier nicht näher erläuterten Routenplanungssystem 36 übernommen sein.

Figur 4, linke Darstellung zeigt die Visualisierungseinheit 4 in einem Betriebsmodus "Ernte 4" 37, wobei im Betriebsmodus "Ernte 4" 37 die Visualisierungseinheit 4 zumindest zwei Visualisierungsbereiche 7, 8 umfasst. Der eine Visualisierungsbereich 8 visualisiert einen den Gutfluss 38 im als Erntevorsatz ausgeführten Anbaugerät 23 umfassenden Bereich 30. Der weitere Visualisierungsbereich 7 zeigt einen rückwärtigen Bereich 21 der landwirtschaftlichen Arbeitsmaschine 2, wobei die Visualisierungsinhalte 9 beider Visualisierungsbereiche 7, 8 Bildinformationen X und/oder Parameterinformationen Y umfassen und die Bildinformationen X von Kamerasystemen 6 generiert werden, die in Richtung des Gutflusses 38 im Anbaugerät 23 und in Richtung des rückwärtigen Bereiches 21 der landwirtschaftlichen Arbeitsmaschine 2 gerichtet sind und die Parameterinformationen Y zumindest die Einblendung von Gutflussstörungen 39 umfasst. Im dargestellten Ausführungsbeispiel sind die Gutflussstörungen 39 durch verschiedenfarbige Balken 40 visualisiert, wobei rot markierte Balken 40 einen Gutstau signalisieren, während orange- oder gelbfarben Balken 40 einen stockenden Gutfluss 38 und grüne Balken 40 einen ungestörten Gutfluss 38 signalisieren.

Die mittlere Darstellung in Figur 4 zeigt das Betreiben der Visualisierungseinheit 4 in einem Betriebsmodus "Ernte 5" 41, wobei im Betriebsmodus "Ernte 5" 41 die Visualisierungseinheit 4 zumindest zwei Visualisierungsbereiche 7, 8 umfasst. Die Inhalte der Visualisierungsbereiche 7, 8 können nach einem oder mehreren der bereits beschriebenen Betriebsmodi "Ernte" 28 ausgestaltet sein. Entscheidend ist, dass im Betriebsmodus "Ernte 5" 41 die Visualisierungsbereiche 7,8 von einem Visualisierungsbereich 42 zur Visualisierung von Parameterinformationen Y überlagert werden. In Analogie zu den bereits beschriebenen Betriebsmodi "Ernte" 28 können die Visualisierungsinhalte 9 der Visualisierungsbereiche 7, 8 wie bereits beschrieben Bildinformationen X und/oder Parameterinformationen Y umfassen. Dabei können die Bildinformationen X zumindest eines Visualisierungsbereichs 7 von Kamerasystemen 6 generiert werden, die in Richtung eines rückwärtigen Bereiches 21 der landwirtschaftlichen Arbeitsmaschine 2 gerichtet sind, sodass zumindest dieser Bereich die Funktion eines Rückspiegels 13 übernimmt, während die in dem überlagernden Visualisierungsbereich 42 visualisierten Parameterinformationen Y zumindest die Visualisierung des Gutstromes 43 in der landwirtschaftlichen Erntemaschine 2, vorzugsweise des Körnerstroms 44 umfasst.

Die rechte Darstellung der Figur 4 zeigt das Betreiben der Visualisierungseinheit 4 in einem Betriebsmodus "Ernte 6" 45, wobei im Betriebsmodus "Ernte 6" 45 die Visualisierungseinheit 4 zumindest zwei Visualisierungsbereiche 7, 8 umfasst. Der eine Visualisierungsbereich 8 visualisiert den Erntegutbestand 46 in einem das Vorfeld 34 des Anbaugerätes 23 umfassenden Bereich 30 und der weitere Visualisierungsbereich 21 visualisiert einen rückwärtigen Bereich der landwirtschaftlichen Arbeitsmaschine 2, wobei die Visualisierungsinhalte 9 beider Visualisierungsbereiche 7, 8 Bildinformationen X und/oder Parameterinformationen Y umfassen und die Bildinformationen X von Kamerasystemen 6 generiert werden die von oben in Richtung des Erntegutbestandes 46 im Vorfeld 34 des Anbaugerätes 23 und in Richtung des rückwärtigen Bereiches 21 der landwirtschaftlichen Arbeitsmaschine 2 gerichtet sind und die Parameterinformationen Y zumindest die Einblendung des gewählten Betriebsmodus 45, hier "Ernte 6", umfasst.

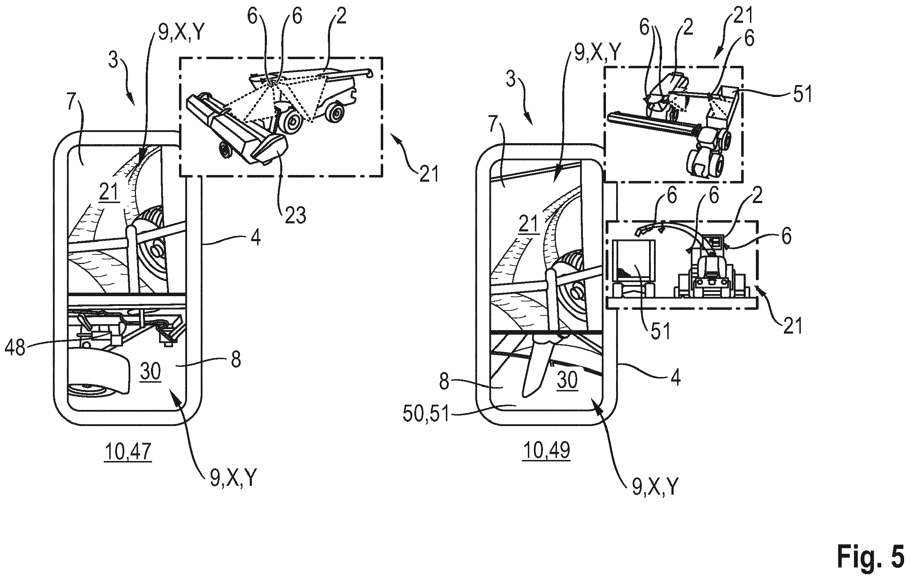

Figur 5 zeigt zwei weitere Betriebsmodi 10 des erfindungsgemäßen Spiegelersatzsystems 3. Die linke Darstellung der Figur 5 zeigt das Betreiben der Visualisierungseinheit 4 in einem Betriebsmodus "Vorsatz An-Abkuppeln" 47, wobei im Betriebsmodus "Vorsatz An-Abkuppeln" 47 die Visualisierungseinheit 4 ebenfalls zumindest zwei Visualisierungsbereiche 7, 8 umfasst. Der eine Visualisierungsbereich 8 visualisiert einen den Kopplungsbereich 48 des Anbaugerätes 23 umfassenden Bereich 30. Der weitere Visualisierungsbereich 7 zeigt einen rückwärtigen Bereich 21 der landwirtschaftlichen Arbeitsmaschine 2, wobei die Visualisierungsinhalte 9 beider Visualisierungsbereiche 7, 8 Bildinformationen X und/oder Parameterinformationen Y umfassen und die Bildinformationen von Kamerasystemen 6 generiert werden, die in Richtung eines den Kopplungsbereich 48 des Anbaugerätes 23 umfassenden Bereich 30 und in Richtung eines rückwärtigen Bereiches 21 der landwirtschaftlichen Arbeitsmaschine 2 gerichtet sind und die Parameterinformationen Y zumindest die Einblendung des gewählten Betriebsmodus 10, hier "Vorsatz An-Abkuppeln" 47 umfasst. Eine derartige Ausgestaltung hat den Effekt, dass der Fahrer 15 der landwirtschaftlichen Arbeitsmaschine 2 eine verbesserte Sicht auf die Koppelpunkte 48 des an- oder abzukoppelnden Anbaugerätes 23 erlangt, sodass sich für ihn der An- oder Abkoppelprozess vereinfacht.

Die rechte Darstellung der Figur 5 zeigt das Betreiben der Visualisierungseinheit 4 in einem Betriebsmodus "Überladen" 49, wobei im Betriebsmodus "Überladen" 49 die Visualisierungseinheit 4 zumindest zwei Visualisierungsbereiche 7, 8 umfasst. Der eine Visualisierungsbereich 8 visualisiert einen den Überladebereich 50 eines Transportfahrzeugs 51 umfassenden Bereich 30. Der weitere Visualisierungsbereich 7 zeigt einen rückwärtigen Bereich 21 der landwirtschaftlichen Arbeitsmaschine 2, wobei die Visualisierungsinhalte 9 beider Visualisierungsbereiche 7,8 Bildinformationen X und/oder Parameterinformationen Y umfassen und die Bildinformationen X von Kamerasystemen 6 generiert werden die in Richtung eines den Überladebereich 50 eines Transportfahrzeugs 51 umfassenden Bereich 30 und in Richtung des rückwärtigen Bereiches 21 der landwirtschaftlichen Arbeitsmaschine 2 gerichtet sind und die Parameterinformationen Y zumindest die Einblendung des gewählten Betriebsmodus 10, hier "Überladen" umfasst, wobei die obere Abbildung der rechten Darstellung schematisch das Überladen 49 einer als Mähdrescher ausgeführten landwirtschaftlichen Arbeitsmaschine 2 und die untere Darstellung schematisch das Überladen 49 einer als Feldhäcksler ausgeführten landwirtschaftlichen Arbeitsmaschine 2 zeigt. Eine derartige Ausgestaltung des erfindungsgemäßen Spiegelersatzsystems 3 hat insbesondere den Effekt, dass das Spiegelersatzsystem 3 neben der originären Rückspiegelfunktion zugleich eine Beobachtung des Ladezustandes des Transportfahrzeugs 51 ermöglicht, sodass der Fahrer 15 in ein und derselben Blickrichtung zugleich zwei Prozesse überwachen kann.

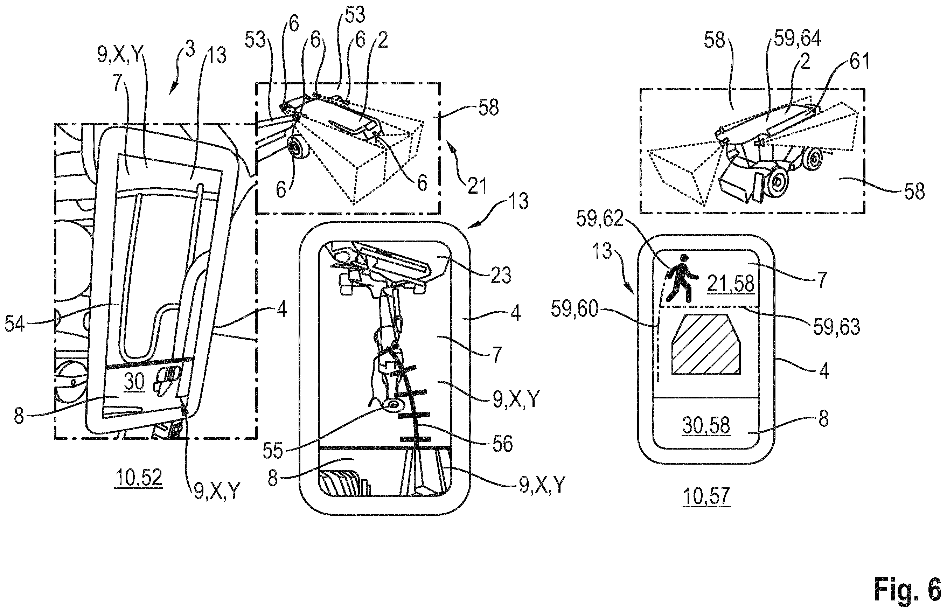

Figur 6 zeigt weitere Betriebsmodi 10 des erfindungsgemäßen Spiegelersatzsystems 3. Die linke Darstellung der Figur 6 zeigt das Betreiben der Visualisierungseinheit 4 in einem Betriebsmodus 10 "Rückwärtsfahrt" 52, wobei im Betriebsmodus "Rückwärtsfahrt" 52 die Visualisierungseinheit 4 ebenfalls zumindest zwei Visualisierungsbereiche 7, 8 umfasst, wobei die Visualisierungsinhalte 9 beider Visualisierungsbereiche 7, 8 Bildinformationen X und/oder Parameterinformationen Y umfassen. Der eine Visualisierungsbereich 8 kann einen beliebig strukturierten Visualisierungsbereich 30 umfassen, während der weitere Visualisierungsbereich 7 nach Art eines Rückspiegels 13 strukturiert ist. Hierfür umfasst die landwirtschaftliche Arbeitsmaschine 2 eine Vielzahl von Kamerasystemen 6, die so an der landwirtschaftlichen Arbeitsmaschine 2 positioniert sind, dass sie seitliche Bereich 53 und rückwärtige Bereiche 21 der landwirtschaftlichen Arbeitsmaschine 2 aufnehmen. Die Bildinformationen X dieser Kamerasysteme 6 werden in der Weise zusammengeführt, dass die Bildinformationen X der seitlichen und rückwärtigen Bereiche 53, 21 zu einem Bild 54 konfektioniert werden und die Parameterinformationen Y zumindest die Einblendung des gewählten Betriebsmodus, hier "Rückwärtsfahrt" 52 umfasst. Auf diese Weise geben die Visualisierungseinheiten 4 Bilder 54 des Umfeldes 58 der landwirtschaftlichen Arbeitsmaschine 2 nach Art einer Weitwinkelkamera wieder.

Insbesondere bei als Mähdrescher ausgeführten landwirtschaftlichen Arbeitsmaschinen 2 wird das Anbaugerät 23 bei Straßentransport im rückwärtigen Bereich des Mähdreschers an diesen über eine Anhängeöse 55 angekoppelt. In einer vorteilhaften Ausgestaltung der Erfindung kann daher im Betriebsmodus "Rückwärtsfahrt" 52 vorgesehen sein, dass die Parameterinformation Y die Einblendung des Spurbildes 56 der Anhängeöse 55 umfasst.

Eine derartige Ausgestaltung hat den Effekt, dass sich die Einsehbarkeit der Bereiche um die landwirtschaftliche Arbeitsmaschine 2 nach Art eines Weitwinkelspiegels verbessert. In diesem Zusammenhang ist es von Vorteil, wenn die Parameterinformation Y die Einblendung des Spurbildes 56 der Anhängeöse 55 der landwirtschaftlichen Arbeitsmaschine 2 bei Rückwärtsfahrt umfasst. Dies vereinfacht für den Fahrer 15 das Lenken der landwirtschaftlichen Arbeitsmaschine 2 beim Ankoppeln eines auf einem Transportwagen positionierten Anbaugerätes 23.

Die rechte Darstellung der Figur 6 zeigt das Betreiben der Visualisierungseinheit 4 in einem Betriebsmodus "Hindernis" 57, wobei im Betriebsmodus "Hindernis" 57 die Visualisierungseinheit 4 zumindest zwei Visualisierungsbereiche 7, 8 umfasst, wobei jeder der Visualisierungsbereiche 7, 8 Bereiche 30, 21 im Umfeld 58 der landwirtschaftlichen Arbeitsmaschine 2 umfasst. Zumindest ein Visualisierungsbereich 7 visualisiert nach Art eines Rückspiegels 13 einen rückwärtigen Bereich 21 und wobei zumindest in diesem Visualisierungsbereich 7 Parameterinformationen Y eingeblendet werden, welche mögliche Kollisionsgefahren 59 visualisieren. Vorzugsweise kann die visualisierte Kollisionsgefahr 59 das Spurbild 60 einer Überladeeinrichtung 61 und/oder Hindernisse 62 im Umfeld 58 der landwirtschaftlichen Arbeitsmaschine 2, etwa Menschen, Bäume oder Telegraphenmasten, und/oder eine Durchfahrtshöhenbegrenzung 63 und/oder Korntankaufsatzgrenzen 64 umfassen. Eine derartige Ausgestaltung hat insbesondere den Effekt, dass der Nutzer eines solchen Spiegelersatzsystems 3 frühzeitige Informationen über potentielle, zukünftige Kollisionsgefahren erhält und so zielgerichtet auf die Vermeidung dieser Kollisionsgefahren hinwirken kann.

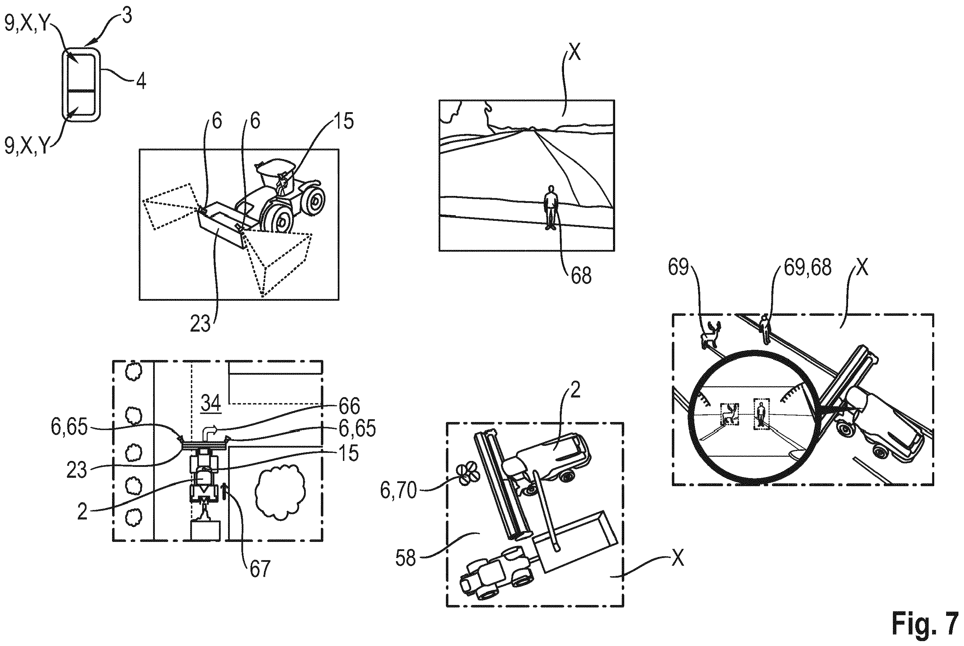

Figur 7 zeigt schließlich spezielle Positionierungen der zuvor beschriebenen Kamerasysteme 6 sowie daraus resultierende spezielle Visualisierungsinhalte 9 der ebenfalls zuvor detailliert beschriebenen Visualisierungseinheit 4. In einer ersten Ausgestaltung kann das die Bildinformation X generierende Kamerasystem 6 vom Anbaugerät 23 aufgenommen werden, sodass die Visualisierungseinheit 4 des Spiegelersatzsystems 3 eingerichtet ist Bildinformationen X bei Kurvenfahrt zu generieren. Dieser Visualisierungsinhalt 9 ist dann besonders hilfreich, wenn sich die landwirtschaftliche Arbeitsmaschine 2 von einem Feld auf die Straße bewegt oder in einen Kreuzungsbereich einer Straße fährt, da das Vorsatzgerät 23 häufig weit vor der Position des Fahrers 15 angeordnet ist, sodass dieser nicht mehr einsehen kann, ob sich im Bereich des Vorsatzgerätes 23 eine Gefahrensituation ergibt.

Weiter kann das die Bildinformation X generierende Kamerasystem 6 so am Vorsatzgerät 23 und/oder der landwirtschaftlichen Arbeitsmaschine 2 positioniert sein, dass das Kamerasystem 6 eingerichtet ist als Abbiegekamera 65 zu fungieren. Dies hat insbesondere die Effekte, dass der Fahrer 15 beim Abbiegen 66 von dem Spiegelersatzsystem 3 Informationen über Verkehrsteilnehmer 67, etwa Radfahrer, und Verkehrssituationen im Vorfeld 34 der landwirtschaftlichen Arbeitsmaschine 2 erhält, die er selbst nicht einsehen kann.

Zudem kann die Visualisierungseinheit 4 des erfindungsgemäßen Spiegelersatzsystems 3 eingerichtet sein, die von dem jeweiligen Kamerasystem 6 generierten Bildinformationen X mit einer Personenerkennung 68 zu kombinieren, sodass Personen 68 in der jeweiligen Visualisierungseinheit 4 besonders kenntlich gemacht werden. In diesem Zusammenhang ist es auch von Vorteil, wenn die Visualisierungseinheit 4 eingerichtet ist die von dem jeweiligen Kamerasystem 6 generierten Bildinformationen X mit Nachtsichteffekten 69 zu kombinieren. Dies verbessert das Erkennen von Lebewesen (Personen 68 oder Tiere) bei Dunkelheit.

Indem die Visualisierungseinheit 4 auch eingerichtet sein kann die Bildinformationen X aus einem Bird-View Kamerasystem 70, etwa eine mit Kameras 6 bestückte Drohne, abzuleiten, erhält der Fahrer 15 der landwirtschaftlichen Arbeitsmaschine 2 zudem detaillierte Informationen über das Umfeld 58 der landwirtschaftlichen Arbeitsmaschine 2.

**Bezugszeichenliste:**

| | | | |
|---|---|---|---|
| 1 | Fahrzeugkabine | 34 | Vorfeld |
| 2 | landwirtschaftliche Arbeitsmaschine | 35 | Sollfahrspur |
| 3 | Spiegelersatzsystem | 36 | Routenplanungssystem |
| 4 | Visualisierungseinheit | 37 | Betriebsmodus "Ernte 4" |
| 5 | Datenverarbeitungseinheit | 38 | Gutfluss |
| 6 | Kamerasystem | 39 | Gutflussstörung |
| 7 | Visualisierungsbereich | 40 | Balken |
| 8 | Visualisierungsberiech | 41 | Betriebsmodus "Ernte 5" |
| 9 | Visualisierungsinhalt | 42 | Visualisierungsbereich |
| 10 | Betriebsmodus | 43 | Gutstrom |
| 11 | Außenspiegel | 44 | Körnerstrom |
| 12 | Innenspiegel | 45 | Betriebsmodus "Ernte 6" |
| 13 | Rückspiegel | 46 | Erntegutbestand |
| 14 | Seitenscheibe | 47 | BM "Vorsatz An-Abkuppeln" |
| 15 | Fahrer | 48 | Kopplungsbereich |
| 16 | Betriebsmodus "Straße" | 49 | Betriebsmodus "Überladen |
| 17 | Bereich | 50 | Überladebereich |
| 18 | Bodeneingriffsmittel | 51 | Transportfahrzeug |
| 19 | Vorderachse | 52 | Betriebsmodus "Rückwärtsfahrt" |
| 20 | Boden | 53 | Seitlicher Bereich |
| 21 | rückwärtiger Bereich | 54 | Konfektioniertes Bild |
| 22 | Strukturbild | 55 | Anhängeöse |
| 23 | Anbaugerät | 56 | Spurbild |
| 24 | Betriebsmodus "gerade Fahrt" | 57 | Betriebsmodus "Hindernis" |
| 25 | Betriebsmodus "Kurvenfahrt" | 58 | Umfeld |
| 26 | Blickwinkel | 59 | Kollisionsgefahr |
| 27 | Blickwinkel | 60 | Spurbild |
| 28 | Betriebsmodus "Ernte" | 61 | Überladeeinrichtung |
| 29 | Betriebsmodus "Ernte 1" | 62 | Hindernisse |
| 30 | Visualisierungsbereich | 63 | Durchfahrtshöhenbegrenzung |
| 31 | Betriebsmodus "Ernte 2" | 64 | Korntankaufsatzgrenzen |
| 32 | Bestandskante | 65 | Abbiegekamera |
| 33 | Betriebsmodus "Ernte 3" | 66 | Abbiegen |
| 67 | Verkehrsteilnehmer | | |
| 68 | Personenerkennung | FR | Fahrtrichtung |
| 69 | Nachtsichteffekt | X | Bildinformation |
| 70 | Bird-View-Kamerasystem | Y | Parameterinformation |

## Patentansprüche

1. Spiegelersatzsystem (3), zumindest eine Visualisierungseinheit (4) umfassend wobei die Visualisierungseinheit (4) mit einer Datenverarbeitungseinheit (5) gekoppelt ist, wobei die Datenverarbeitungseinheit (5) von einer oder mehreren Kamerasystemen (6) generierte Bildinformationen (X) und Parameterinformationen (Y) bereitstellt, **dadurch**
**gekennzeichnet, dass**
die zumindest eine Visualisierungseinheit (4) in Visualisierungsbereiche (7,8) unterteilt ist und das jedem Visualisierungsbereich (7,8) von der Datenverarbeitungseinheit (5) bereitgestellte Visualisierungsinhalte (9) zugewiesen werden und die Visualisierungsinhalte (9) Bildinformationen (X) und Parameterinformationen (Y) umfassen.

2. Spiegelersatzsystem (3), zumindest eine Visualisierungseinheit (4) umfassend, nach Anspruch 1, **dadurch gekennzeichnet, dass**
die Visualisierungsinhalte (9) editierbar sind.

3. Spiegelersatzsystem (3), zumindest eine Visualisierungseinheit (4) umfassend, nach einem der vorhergehenden Ansprüche, **dadurch gekennzeichnet, dass**
die Visualisierungseinheit (4) in Betriebsmodi (10) betreibbar ist, wobei die Visualisierungsbereiche (7,8) der Visualisierungseinheit (4) einen einzigen Betriebsmodus (10) oder mehrere Betriebsmodi (10) visualisieren.

4. Spiegelersatzsystem (3), zumindest eine Visualisierungseinheit (4) umfassend, nach einem der vorhergehenden Ansprüche, **dadurch gekennzeichnet, dass**
die Visualisierungseinheit (4) als linksseitiger oder rechtsseitiger Außenspiegel (11) oder als Innenspiegel (12) ausgeführt ist.

5. Landwirtschaftliche Arbeitsmaschine (2) mit einer Fahrzeugkabine (1) und einem der Fahrzeugkabine (1) zugeordneten Spiegelersatzsystem (3), wobei das Spiegelersatzsystem (3) zumindest eine Visualisierungseinheit (4) nach einem der vorhergehenden Ansprüche umfasst, **dadurch gekennzeichnet, dass**
die Visualisierungseinheit (4) als linksseitiger und/oder rechtsseitiger Außenspiel (11) und/oder als Innenspiegel (12) ausgeführt ist.

6. Landwirtschaftliche Arbeitsmaschine (2) mit einer Fahrzeugkabine (1) und einem der Fahrzeugkabine (1) zugeordneten Spiegelersatzsystem (3) nach Anspruch 5, **dadurch**
**gekennzeichnet, dass**
der Fahrzeugkabine (1) jeweils mehrere als linksseitige und/oder rechtsseitige Außenspiegel (11) und/oder als Innenspiegel (12) ausgeführte Visualisierungseinheiten (4) zugeordnet sind.

7. Landwirtschaftliche Arbeitsmaschine (2) mit einer Fahrzeugkabine (1) und einem der Fahrzeugkabine (1) zugeordneten Spiegelersatzsystem (3) nach einem der Ansprüche 5 oder 6, **dadurch gekennzeichnet, dass**
zumindest die als rechtsseitige und linksseitige Außenspiegel (11) ausgeführten Visualisierungseinheiten (4) der Fahrzeugkabine (1) innenseitig und/oder außenseitig zugeordnet sind.

8. Landwirtschaftliche Arbeitsmaschine (2) mit einer Fahrzeugkabine (1) und einem der Fahrzeugkabine (1) zugeordneten Spiegelersatzsystem (3) nach einem der vorhergehenden Ansprüche; **dadurch gekennzeichnet, dass**
die landwirtschaftliche Arbeitsmaschine (2) als Mähdrescher oder Feldhäcksler ausgeführt ist.

9. Landwirtschaftliche Arbeitsmaschine (2) mit einer Fahrzeugkabine (1) und einem der Fahrzeugkabine (1) zugeordneten Spiegelersatzsystem (3) nach einem der vorhergehenden Ansprüche, **dadurch gekennzeichnet, dass**
die Visualisierungseinrichtung in einem Betriebsmodus "Straße" (16) betreibbar ist, wobei im Betriebsmodus "Straße" (16) die Visualisierungseinheit (4) zumindest zwei Visualisierungsbereiche (7,8) umfasst, wobei der eine Visualisierungsbereich (8) einen Bereich um ein Bodeneingriffsmittel (18) einer Vorderachse (19) der landwirtschaftlichen Arbeitsmaschine (2) und der weitere Visualisierungsbereich (7,8) einen rückwärtigen Bereich (21) der landwirtschaftlichen Arbeitsmaschine (2) visualisiert, wobei die Visualisierungsinhalte (9) beider Visualisierungsbereiche (7,8) Bildinformationen (X) und/oder Parameterinformationen (Y) umfassen und die Bildinformationen (X) von Kamerasystemen (6) generiert werden, die in Richtung Boden (20) und in Richtung des rückwärtigen Bereiches (21) der landwirtschaftlichen Arbeitsmaschine (2) gerichtet sind und die Parameterinformationen (Y) zumindest ein Strukturbild (22) einer Ausrichtung eines rückwärtig an der landwirtschaftlichen Arbeitsmaschine (2) adaptierten Anbaugerätes (23) umfassen.

10. Landwirtschaftliche Arbeitsmaschine (2) mit einer Fahrzeugkabine (1) und einem der Fahrzeugkabine (1) zugeordneten Spiegelersatzsystem (3) nach Anspruch 9, **dadurch**
**gekennzeichnet, dass**
der Betriebsmodus "Straße" (16) einen Betriebsmodus "gerade Fahrt" (24) und einen Betriebsmodus "Kurvenfahrt" (25) umfasst und dass im Betriebsmodus "Kurvenfahrt" (25) ein größerer Blickwinkel (26,27) des in den rückwärtigen Bereich (21) der landwirtschaftlichen Arbeitsmaschine (2) gerichteten Kamerasystems (6) realisiert ist.

11. Landwirtschaftliche Arbeitsmaschine (2) mit einer Fahrzeugkabine (1) und einem der Fahrzeugkabine (1) zugeordneten Spiegelersatzsystem (3) nach einem der vorhergehenden Ansprüche, **dadurch gekennzeichnet, dass**
der Betriebsmodus (10) der Visualisierungseinheit (4) eine Vielzahl von Betriebsmodi "Ernte" (28) umfasst.

12. Landwirtschaftliche Arbeitsmaschine (2) mit einer Fahrzeugkabine (1) und einem der Fahrzeugkabine (1) zugeordneten Spiegelersatzsystem (3) nach Anspruch 11,
**dadurch gekennzeichnet, dass**
die Visualisierungseinheit (4) in einem Betriebsmodus "Ernte 1" (28, 29) betreibbar ist, wobei im Betriebsmodus "Ernte 1" (29) die Visualisierungseinheit (4) zumindest zwei Visualisierungsbereiche (7,8) umfasst, wobei der eine Visualisierungsbereich (8) einen Bereich im rückwärtige Bereich (30) eines Anbaugerätes (23) und der weitere Visualisierungsbereich (8) einen rückwärtigen Bereich (21) der landwirtschaftlichen Arbeitsmaschine (2) visualisiert, wobei die Visualisierungsinhalte (9) beider Visualisierungsbereiche (7,8) Bildinformationen (X) und/oder Parameterinformationen (Y) umfassen und die Bildinformationen (X) von Kamerasystemen (6) generiert werden die in Richtung Boden (20) und in Richtung des rückwärtigen Bereiches (21) der landwirtschaftlichen Arbeitsmaschine (2) gerichtet sind und die Parameterinformationen (Y) zumindest die Einblendung des gewählten Betriebsmodus (28, 29) umfasst.

13. Landwirtschaftliche Arbeitsmaschine (2) mit einer Fahrzeugkabine (1) und einem der Fahrzeugkabine (1) zugeordneten Spiegelersatzsystem (3) nach Anspruch 12,
**dadurch gekennzeichnet, dass**
der Visualisierungsinhalt (9) des den rückwärtigen Bereich (21) des Anbaugerätes (23) abbildende Visualisierungsbereich (30) in einem flächenmäßig größeren Visualisierungsbereich (8) angezeigt wird und der Bildausschnitt um 90° gedreht ist.

14. Landwirtschaftliche Arbeitsmaschine (2) mit einer Fahrzeugkabine (1) und einem der Fahrzeugkabine (1) zugeordneten Spiegelersatzsystem (3) nach Anspruch 11,
**dadurch gekennzeichnet, dass**
die Visualisierungseinheit (4) in einem Betriebsmodus "Ernte 2" (28, 31) betreibbar ist, wobei im Betriebsmodus "Ernte 2" (31) die Visualisierungseinheit (4) zumindest zwei Visualisierungsbereiche (7,8) umfasst, wobei der eine Visualisierungsbereich (8) einen die Bestandskante (32) umfassenden Bereich und der weitere Visualisierungsbereich (7) einen rückwärtigen Bereich (21) der landwirtschaftlichen Arbeitsmaschine (2) visualisiert, wobei die Visualisierungsinhalte (9) beider Visualisierungsbereiche (7,8) Bildinformationen (X) und/oder Parameterinformationen (Y) umfassen und die Bildinformationen (X) von Kamerasystemen (6) generiert werden die in Richtung Bestandskante (32) und in Richtung des rückwärtigen Bereiches (21) der landwirtschaftlichen Arbeitsmaschine (2) gerichtet sind und die Parameterinformationen (Y) zumindest die Einblendung des gewählten Betriebsmodus (28, 31) umfasst.

15. Landwirtschaftliche Arbeitsmaschine (2) mit einer Fahrzeugkabine (1) und einem der Fahrzeugkabine (1) zugeordneten Spiegelersatzsystem (3) nach Anspruch 11,
**dadurch gekennzeichnet, dass**
die Visualisierungseinheit (4) in einem Betriebsmodus "Ernte 3" (28, 33) betreibbar ist, wobei im Betriebsmodus "Ernte 3" (33) die Visualisierungseinheit (4) zumindest zwei Visualisierungsbereiche (7,8) umfasst, wobei der eine Visualisierungsbereich (8) einen das Vorfeld (34) der landwirtschaftlichen Arbeitsmaschine (2) umfassenden Bereich und der weitere Visualisierungsbereich (7) einen rückwärtigen Bereich (21) der landwirtschaftlichen Arbeitsmaschine (2) visualisiert, wobei die Visualisierungsinhalte (9) beider Visualisierungsbereiche (7,8) Bildinformationen (X) und/oder Parameterinformationen (Y) umfassen, wobei die Bildinformationen (X) von Kamerasystemen (6) generiert werden, die in Richtung Vorfeld (34) der landwirtschaftlichen Arbeitsmaschine (2) und in Richtung des rückwärtigen Bereiches (21) der landwirtschaftlichen Arbeitsmaschine (2) gerichtet sind und die Parameterinformationen (Y) zumindest die Einblendung von Sollfahrspuren (35) des gewählten Betriebsmodus (28, 33) umfasst.

16. Landwirtschaftliche Arbeitsmaschine (2) mit einer Fahrzeugkabine (1) und einem der Fahrzeugkabine (1) zugeordneten Spiegelersatzsystem (3) nach Anspruch 11,
**dadurch gekennzeichnet, dass**
die Visualisierungseinheit (4) in einem Betriebsmodus "Ernte 4" (28, 37) betreibbar ist, wobei im Betriebsmodus "Ernte 4" (37) die Visualisierungseinheit (4) zumindest zwei Visualisierungsbereiche (7,8) umfasst, wobei der eine Visualisierungsbereich (8) einen den Gutfluss (38) im Anbaugerät (23) umfassenden Bereich und der weitere Visualisierungsbereich (7) einen rückwärtigen Bereich (21) der landwirtschaftlichen Arbeitsmaschine (2) visualisiert und die Visualisierungsinhalte (9) beider Visualisierungsbereiche (7,8) Bildinformationen (X) und/oder Parameterinformationen (Y) umfassen, wobei die Bildinformationen (X) von Kamerasystemen (6) generiert werden die in Richtung des Gutflusses (38) im Anbaugerät (23) und in Richtung des rückwärtigen Bereiches (21) der landwirtschaftlichen Arbeitsmaschine (2) gerichtet sind und die Parameterinformationen (Y) zumindest die Einblendung von Gutflussstörungen (39) umfassen.

17. Landwirtschaftliche Arbeitsmaschine (2) mit einer Fahrzeugkabine (1) und einem der Fahrzeugkabine (1) zugeordneten Spiegelersatzsystem (3) nach Anspruch 11,
**dadurch gekennzeichnet, dass**
die Visualisierungseinheit (4) in einem Betriebsmodus "Ernte 5" (28, 41) betreibbar ist, wobei im Betriebsmodus "Ernte 5" (41) die Visualisierungseinheit (4) zumindest zwei Visualisierungsbereiche (7,8) umfasst, wobei die Visualisierungsbereiche (7, 8) nach einem oder mehreren der Ansprüche 2 bis 16 ausgeführt sind und wobei diese Visualisierungsbereiche (7,8) von einem Visualisierungsbereich (42) zur Visualisierung von Parameterinformationen (Y) überlagert werden, wobei die Visualisierungsinhalte (9) der Visualisierungsbereiche (7,8) Bildinformationen (X) und/oder Parameterinformationen (Y) umfassen und die Bildinformationen (X) zumindest eines Visualisierungsbereichs (7,8) von Kamerasystemen (6) generiert werden, die in Richtung eines rückwärtigen Bereiches (21) der landwirtschaftlichen Arbeitsmaschine (2) gerichtet sind und die in dem überlagernden Visualisierungsbereich (42) visualisierten Parameterinformationen (Y) zumindest die Visualisierung des Gutstromes (43) in der landwirtschaftlichen Erntemaschine (2), vorzugsweise des Körnerstroms (44), umfassen.

18. Landwirtschaftliche Arbeitsmaschine (2) mit einer Fahrzeugkabine (1) und einem der Fahrzeugkabine (1) zugeordneten Spiegelersatzsystem (3) nach Anspruch 11,
**dadurch gekennzeichnet, dass**
die Visualisierungseinheit (4) in einem Betriebsmodus "Ernte 6" (28, 45) betreibbar ist, wobei im Betriebsmodus "Ernte 6" (45) die Visualisierungseinheit (4) zumindest zwei Visualisierungsbereiche (7,8) umfasst, wobei der eine Visualisierungsbereich (8) einen den Erntegutbestand (46) im Vorfeld (34) des Anbaugerätes (23) umfassenden Bereich und der weitere Visualisierungsbereich (7) einen rückwärtigen Bereich (21) der landwirtschaftlichen Arbeitsmaschine (2) visualisiert, wobei die Visualisierungsinhalte (9) beider Visualisierungsbereiche (7,8) Bildinformationen (X) und/oder Parameterinformationen (Y) umfassen und die Bildinformationen (X) von Kamerasystemen (6) generiert werden die von oben in Richtung des Erntegutbestandes (46) im Vorfeld (34) des Anbaugerätes (23) und in Richtung des rückwärtigen Bereiches (21) der landwirtschaftlichen Arbeitsmaschine (2) gerichtet sind und die Parameterinformationen (Y) zumindest die Einblendung des gewählten Betriebsmodus (28, 45) umfassen.
